# EUROPÄISCHE PATENTSCHRIFT

(11) **EP 0 512 440 B1**
(45) Veröffentlichungstag und Bekanntmachung des Hinweises auf die Patenterteilung: **11.10.1995**
(21) Anmeldenummer: 92107472.0
(22) Anmeldetag: 02.05.1992
(51) Int. Cl.: B60R 1/06

(54) **Einrichtung zum Verstellen einer Spindel**
Device for adjusting a spindle
Dispositif pour déplacer un pivot

(30) Priorität: 10.05.1991 DE 9105829 U
(43) Veröffentlichungstag der Anmeldung: 11.11.1992
(73) Patentinhaber: ROBERT BOSCH GMBH, 70442 Stuttgart (DE)
(72) Erfinder: Fornoff, Dieter, Dipl.-Ing., W-7500 Karlsruhe (DE); Dilger, Werner, W-7580 Bühl-Weitenung (DE); Dreier, Friedrich-Wilhelm, Dipl.-Ing., W-7580 Bühl (DE)

(56) Entgegenhaltungen:
- EP-A- 0 112 140
- EP-A- 0 289 266
- DE-C- 3 635 920

## Beschreibung

### Stand der Technik

Die Erfindung geht aus von einer Einrichtung nach dem Oberbegriff des Anspruchs 1. Aus der DE 33 23 923 A1 ist bereits eine Einrichtung zum Verstellen eines Gliedes bekannt, das insbesondere dem Verstellen eines Rückspiegels eines Kraftfahrzeugs dient. Das Glied ist an einem Ende an eine mit einem Spiegel belegte Platte angelenkt und ragt mit seinem anderen Ende in eine Verstellmutter. Dieses andere Ende trägt einen elastischen Ring, der einen elastischen Formschluß zu dem Muttergewinde herstellt. Der elastische Ring wirkt beim Erreichen der Verstellendstellungen als Rutschkupplung und gleicht allerdings nur in geringem Maße eine beim Verstellen auftretende Schräglage des Gliedes gegenüber dem Muttergewinde aus. Bei größeren Verstellwinkeln treten daher Verspannungen und Reibungsverluste in den Antriebsgliedern auf. Der Gummiring kann auch zu ruckhaftem Verstellen bzw. Rattern des Antriebs führen. Auch bei möglichem Verschleiß des elastischen Gummirings können Funktionsstörungen auftreten.

Es ist ferner aus der EP-A-0 112 140 eine Verstelleinrichtung gemäß dem Oberbegriff des Anspruchs 1 bekannt, bei der die Spindel mit einem in einem kugeligen Lagerelement sitzenden Gegenstück zusammenwirkt, so daß die Spindel eine gewisse Schräglage einnehmen kann.

### Vorteile der Erfindung

Die erfindungsgemäße Einrichtung mit den kennzeichnenden Merkmalen des Anspruchs 1 stellt demgegenüber auch bei großen Verstellwinkeln einen zuverlässigen Antrieb und eine querkraftfreie Lagerung der Spindel dar. Außerdem ist in vorteilhafter Weise ein reibungsarmer Antrieb der Spindel möglich, was die Verwendung kleinerer Antriebsmotoren ermöglicht.

Durch die in den abhängigen Ansprüchen aufgeführten Maßnahmen sind vorteilhafte Weiterbildungen und Verbesserungen der im Anspruch 1 angegebenen Einrichtung möglich. Besonders vorteilhaft ist es, wenn das die Spindel und ihr kugelig ausgebildetes Gegenstück haltende Lagerelement gleichzeitig als Zahnrad dient. Alternativ kann auch das Lagerelement mit dem Gehäuse verbunden sein und das Gegenstück direkt angetrieben werden. Eine besonders leichte Montage ergibt sich durch Einstecken des Lagerelements in das Gehäuse und Aufsetzen eines beide Teile zusammenhaltenden Federrings. Weitere Vorteile sind in der Figurenbeschreibung angegeben.

### Zeichnung

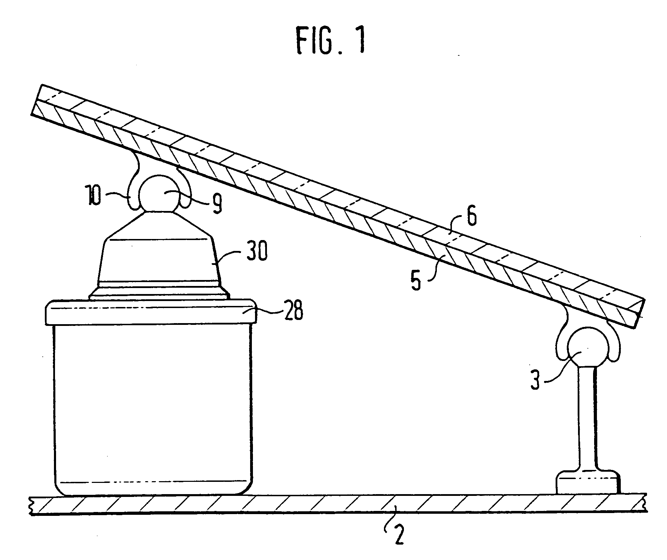

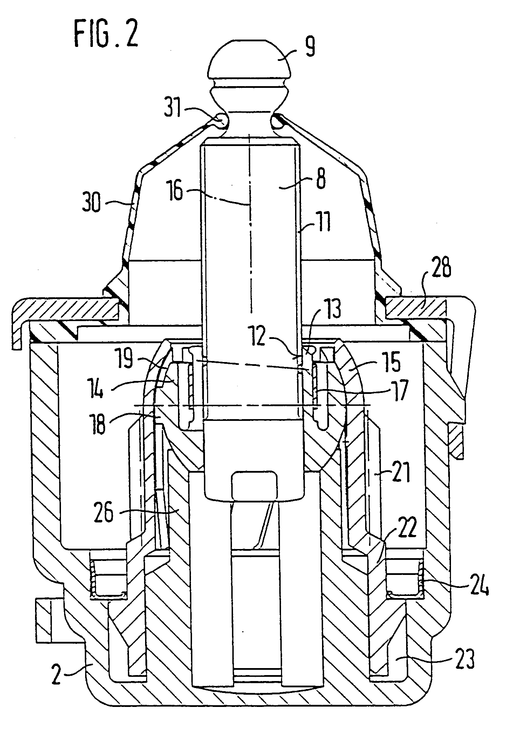

Ein Ausführungsbeispiel der Erfindung ist in der Zeichnung dargestellt und in der nachfolgenden Beschreibung näher erläutert. Figur 1 zeigt eine Seitenansicht der erfindungsgemäßen Einrichtung und Figur 2 einen Querschnitt durch die Antriebsglieder.

### Beschreibung des Ausführungsbeispiels

An einem Gehäuse 2 ist ein Kugelzapfen 3 als ortsfeste bewegliche Abstützung für eine Platte 5 angeordnet. An der Platte 5 ist ein Spiegel 6 als verstellbarer Rückspiegel für ein Kraftfahrzeug befestigt. Die Platte 5 ist außerdem an vorzugsweise zwei Spindeln 8 angelenkt, von denen nur eine in der Zeichnung gezeigt ist. Die Spindel 8 trägt an ihrem spiegelseitigen Ende einen Kugelkopf 9, der von einer Kugelpfanne 10 an der Platte 5 umgriffen wird. Der Kugelkopf 9 verkörpert einen Anlenkpunkt der Spindel 8 an die Platte 5, der beim Verstellen der Spindel eine Kreisbahn um den Kugelzapfen 3 beschreibt.

Wie Figur 2 zeigt, trägt die Spindel 8 am Umfang ein Gewinde 11, das mit einem Innengewinde 12 zusammenarbeitet. Dieses ist an kranzförmig um die Spindel 8 angeordneten Armen 13 eines Gegenstücks 14 angebracht, die auslenken, wenn die Spindel am Endanschlag ist. Das Gegenstück 14 hat eine kugelige Außenform und ist in einem konkaven Lagerelement 15 kugelig gelagert, so daß die Mittelachse 16 der Spindel 8 gegenüber dem Gehäuse 2 verschiedene Winkellagen einnehmen kann. Die Arme 13 sind im Ausführungsbeispiel von einer elastischen Spannhülse 17 zusammengehalten.

Zur Übertragung eines Drehmoments von dem Lagerelement 15 auf das Gegenstück 14 trägt dieses Mitnehmer 18, die in etwa parallel zur Achse 16 verlaufende Schlitze 19 des Lagerelements 15 eingreifen. Dadurch ist die Drehmitnahme des Gegenstücks in jeder von der Spindel einnehmbaren Winkellage gewährleistet. Das Lagerelement 15 trägt an seinem Umfang eine Verzahnung 21 und bildet damit ein Zahnrad, das beispielsweise von einer nicht gezeigten Schneckenwelle antreibbar ist. Das Lagerelement 15 trägt im Anschluß an die Verzahnung 21 einen ringförmigen Fortsatz 22, der in eine Ringnut 23 des Gehäuses 2 einsetzbar ist. Der Fortsatz 22 wird mittels einer Federscheibe 24 in dem Gehäuse 2 gehalten.

Innerhalb des Lagerelements 15 erstreckt sich eine zylinderförmige Gehäusewand 26, die das Gegenstück 14 von unten her abstützt. Nach oben hin wird das Gegenstück von dem Lagerelements 15 umgriffen und gesichert.

Das Gehäuse 2 ist zur Platte 5 hin durch einen rastbaren Deckel 28 verschlossen. Zwischen das Gehäuse 2 und den Deckel 28 ist eine Dichtung 30 eingesetzt. Die Dichtung 30 umgreift auch die Spindel 8 und endet unmittelbar unterhalb des Kugelkopfes 9 mit einem an der Spindel 8 anliegenden Kragen 31.

Der Rückspiegel 6 bildet zusammen mit der Platte 5 ein Bauelement, das mit Hilfe der in Figur 2 gezeigten Stelleinrichtung in seiner Winkellage gegenüber dem Gehäuse 2 verstellt werden kann. Dies geschieht dadurch, daß das Lagerelement 15 drehend angetrieben wird, was zu einer Verdrehung des Gegenstücks 14 und über die Gewinde 12, 13 zu einer Axialbewegung der Spindel 8 führt. Bei linearer Verschiebung der Spindel 8 entlang ihrer Mittelachse 16 würden allerdings in den Antriebsgliedern 8, 14, 15 Querkräfte erzeugt, da die Kugelpfanne 10 beim Verstellen eine kreisförmige Bewegung ausführt. Daher ist die Spindel 8 mit ihrem Gegenstück 14 in dem Lagerelement 15 so schwenkbar, daß der Kugelkopf 9 ebenfalls auf einer Kreisbahn bewegbar ist. Die Spindel 8 nimmt bei verschiedenen Verstellwinkeln der Platte 5 gegenüber dem Gehäuse 2 verschiedene Winkellagen gegenüber dem Lagerelement 15 und dem Gehäuse 2 ein.

Die Montage der Verstelleinrichtung erfolgt durch einfaches Ineinanderstecken der Einzelteile. Das Gegenstück 14 wird mit eingeschraubter Spindel 8 von unten in das Lagerelement 15 eingelegt. Beides zusammen wird über die Gehäusewand 26 gestülpt, so daß das Gegenstück 14 an dessen Rand anliegt. Anschließend wird die Federscheibe 24 zwischen Lagerelement 15 und Gehäuseaußenwand eingesetzt und angedrückt. Zum Schluß wird der Deckel 28 mit eingesetzter Dichtung 30 auf das Gehäuse 2 aufgesetzt. Dabei wird der Kragen 31 über den Kugelkopf 9 der Spindel 8 gestülpt. Bei der Montage ist keine besondere Abstimmung zwischen Deckel 28 und Gehäuse 2 erforderlich. Der Deckel ist für die Funktion der Verstelleinrichtung nicht maßgeblich.

## Patentansprüche

1. Einrichtung zum Verstellen einer Spindel (8), die insbesondere an eine in ihrer Neigung einstellbare Platte (5), beispielsweise zur Halterung eines Rückspiegels (6) eines Kraftfahrzeugs, angelenkt ist, wobei ein Gewinde (11) der Spindel (8) mit einem ebenfalls ein Gewinde (12) tragenden Gegenstück (14) zusammenarbeitet, welches drehend antreibbar ist, sodaß der Abstand des Endes der Spindel (8) je nach Drehsinn des Gegenstücks (14) vergrößer- oder verkleinerbar ist, wobei das Gegenstück (14) in einem konkaven Lagerelement(15) kugelig gegenüber dem Gehäuse (2) gelagert ist sodaß die Spindel (8) bzw. deren Mittelachse (16) in Bezug auf das Gehäuse (2) verschiedene Winkellagen einnehmen kann, dadurch gekennzeichnet, daß das Innengewinde (12) des Gegenstücks (14) an kranzförmig um das Gewinde (11) der Spindel (8) angeordneten nachgiebigen Armen (13) angebracht ist.

2. Einrichtung nach Anspruch 1, dadurch gekennzeichnet, daß die Arme (13) von einer elastischen Spannhülse (17) umschlossen sind.

3. Einrichtung nach einem der vorhergehenden Ansprüche, dadurch gekennzeichnet, daß das Gegenstück (14) motorisch antreibbar ist.

4. Einrichtung nach einem der vorhergehenden Ansprüche, dadurch gekennzeichnet, daß das Lagerelement (15) als drehbar in dem Gehäuse (2) gelagertes Zahnrad ausgebildet ist.

5. Einrichtung nach einem der vorhergehenden Ansprüche, dadurch gekennzeichnet, daß das Gegenstück (14) Mitnehmer (18) trägt, die in die etwa parallel zur Mittelachse (16) des Lagerelements (15) verlaufenden Schlitze (19) des Lagerelements (15) eingreifen.

6. Einrichtung nach einem der vorhergehenden Ansprüche, dadurch gekennzeichnet, daß das Lagerelement (15) von einer Federscheibe (24) in dem Gehäuse (2) gehalten wird.

7. Einrichtung nach einem der vorhergehenden Ansprüche, dadurch gekennzeichnet, daß die Platte (5) um mindestens einen festen Punkt (3) an dem Gehäuse schwenkbar ist, sodaß das Ende (9) der Spindel (8) beim Schwenken eine Kreisbahn beschreibt.

## Claims

1. Device for adjusting a spindle (8) which is hinge-connected, in particular, to a plate (5) which is adjustable in its inclination, for example for the mounting of a rear-view mirror (6) of a motor vehicle, a thread (11) of the spindle (8) interacting with a counter-part (14) likewise bearing a thread (12), which counter-part can be rotary-driven, so that the clearance of the end of the spindle (8), according to the direction of rotation of the counter-part (14), can be enlarged or diminished, the counter-part (14) being mounted in a concave bearing element (15) spherically relative to the housing (2), thereby enabling the spindle (8) or its central axis (16) to assume various angular positions in relation to the housing (2), characterized in that the internal thread (12) of the counter-part (14) is fitted to flexible arms (13) disposed in a crown shape around the thread (11) of the spindle (8).

2. Device according to Claim 1, characterized in that the arms (13) are enclosed by an elastic clamping sleeve (17).

3. Device according to one of the preceding claims, characterized in that the counter-part (14) can be motor-driven.

4. Device according to one of the preceding claims, characterized in that the bearing element (15) is configured as a gearwheel mounted rotatably in the housing (2).

5. Device according to one of the preceding claims, characterized in that the counter-part (14) bears dogs (18), which engage in the slots (19) of the bearing element (15), the said slots running roughly parallel to the centre axis (16) of the bearing element (15).

6. Device according to one of the preceding claims, characterized in that the bearing element (15) is held by a spring washer (24) in the housing (2).

7. Device according to one of the preceding claims, characterized in that the plate (5) is pivotable about at least one fixed point (3) on the housing, so that the end (9) of the spindle (8), when pivoted, describes a circular path.

## Revendications

1. Dispositif pour déplacer un pivot (8) qui est en particulier articulé sur une plaque (5) dont l'inclinaison peut être réglée, par exemple pour supporter un rétroviseur (6) d'un véhicule à moteur, dispositif dans lequel un filetage (11) du pivot (8) coopère avec une pièce antagoniste (14) portant également un filetage (12), pièce qui peut être entraînée en rotation de telle sorte que la distance de l'extrémité du pivot (8) selon le sens de rotation de la pièce correspondante (14) puisse être augmentée ou réduite, la pièce antagoniste (14) étant montée dans un élément concave de support (15) de forme sphérique par rapport au boîtier (2), de telle sorte que le pivot (8) ou son axe médian (16) puisse prendre des positions angulaires différentes par rapport au boîtier (2), dispositif caractérisé en ce que le filetage intérieur (12) de la pièce antagoniste (14) est mis sur des bras flexibles (13) disposés en forme de couronne autour du filetage (11) du pivot (8).

2. Dispositif selon la revendication 1, caractérisé en ce que les bras (13) sont entourés par une douille élastique de serrage (17).

3. Dispositif selon l'une des revendications précédentes, caractérisé en ce que la pièce antagoniste (14) peut être entraînée par un moteur.

4. Dispositif selon l'une des revendications précédentes, caractérisé en ce que l'élément de support (15) peut être constitué sous la forme d'une roue dentée montée de façon à pouvoir tourner dans le boîtier (2).

5. Dispositif selon l'une des revendications précédentes, caractérisé en ce que la pièce antagoniste (14) porte des entraîneurs (18), qui viennent en prise dans des fentes (19) de l'élément de support (15), qui s'étendent de façon à peu près parallèle à l'axe médian (16) de l'élément de support (15).

6. Dispositif selon l'une des revendications précédentes, caractérisé en ce que l'élément de support (15) est maintenu par un disque élastique (24) dans le boîtier (2).

7. Dispositif selon l'une des revendications précédentes, caractérisé en ce que la plaque (5) peut pivoter autour d'au moins un point fixe (3) sur le boîtier, de telle sorte que l'extrémité (9) du pivot (8) décrive lors du pivotement une trajectoire circulaire.
